# EUROPÄISCHE PATENTSCHRIFT

(11) **EP 0 641 140 B1**
(45) Veröffentlichungstag und Bekanntmachung des Hinweises auf die Patenterteilung: **29.10.2003**
(21) Anmeldenummer: 94112401.8
(22) Anmeldetag: 09.08.1994
(51) Int. Cl.: H04Q 11/04, H04M 11/06, H04Q 3/62

(54) **Verfahren zum Betrieb eines aus mehreren Vermittlungen bestehenden digitalen Kommunikationsnetzes**
Method of operating a digital communications network with several switches
Méthode d'opération d'un réseau de communication avec plusieurs commutateurs

(30) Priorität: 28.08.1993 DE 4329056
(43) Veröffentlichungstag der Anmeldung: 01.03.1995
(73) Patentinhaber: Tenovis GmbH & Co. KG, 60362 Frankfurt am Main (DE)
(72) Erfinder: Gärtner, Peter, D-47269 Duisburg (DE); Loch, Wolfgang, D-47506 Neukirchen-Vluyn (DE); Sieben, Thomas, D-40229 Düsseldorf (DE)

(56) Entgegenhaltungen:
- EP-A- 0 493 913
- DE-A- 3 526 708
- DE-A- 4 225 240
- KORPI M ET AL: "GLOBAL VERNETZT MIT CORNET - D-KANAL-PROTOKOLL BASIERT AUF NATIONALEN UND INTERNATIONALEN NORMEN" TELCOM REPORT, Bd. 15, Nr. 6, 1.November 1992, Seiten 284-287, XP000343333
- BROEKHUIZEN J M: "DPNSS1 IN SOPHO-S" PHILIPS TELECOMMUNICATION & DATA SYSTEMS REVIEW, Bd. 45, Nr. 3, 1.September 1987, Seiten 28-34, XP002046618

## Beschreibung

Die Erfindung betrifft ein Verfahren zum Betrieb eines aus mehreren Teilanlagen bestehenden digitalen Kommunikationsnetzes nach dem Oberbegriff des Patentanspruchs 1.

Aus der DE 35 26 708 A1 ist eine Schaltungsanordnung zur Übertragung von Wahlinformation zwischen Vermittlungsanlagen innerhalb eines Kommunikationsnetzes bekannt. Zu diesem Zweck werden Informationspeichereinrichtungen an die Leitungseinrichtungsanschlüsse geschaltet, welche an einer Verbindung zwischen zwei Vermittlungsanlagen beteiligt sind. Darin wird die jeweils ankommende Wahlinformation aufgenommen, damit sie in der betreffenden Vermittlungsanlage verarbeitet werden kann und zum eventuell notwendigen Nachsenden zu einer anderen Vermittlungsanlage bereitsteht. Hierfür sind im Sprachbereich liegende Tonfrequenzen vorgesehen, damit eine derartige Übertragung von Wahlinformation sowohl analog als auch in digitalisierter Form stattfinden kann, wie dies in Spalte 3 von den Zeilen 5 bis 11 beschrieben ist.

Eine Übertragung von Kennzeichen anderer Art, z. B. von vermittlungstechnischen Informationen, welche eine Verbindung zwischen zwei zu einem Kommunikationsnetz gehörenden Vermittlungsanlagen betreffen, ist in dieser Schrift nicht erwähnt. Da derartige Informationen grundsätzlich in digitaler Form vorliegen, müßten diesen jeweils einzeln Tonfrequenzen zugeordnet werden, was zu einer sehr niedrigen Übertragungsgeschwindigkeit führt.

Ein Kommunikationssystem zum Bilden von virtuellen Netzen zwischen privaten Kommunikationsanlagen ist aus der DE 42 25 240 A1 bekannt. Die an einem virtuellen Netz beteiligten Vermittlungsanlagen werden über das öffentliche diensteintegrierende Digitalnetz (ISDN) bedarfsweise miteinander verbunden. Der dabei erforderliche Austausch von zusätzlichen Informationen zwischen diesen Vermittlungsanlagen wird über den im Digitalnetz vorhandenen Signalisierungskanal vorgenommen, oder es wird ein sogenannter B-Kanal für einen paketorientierten Datendienst in Anspruch genommen. Da der Signalisierungskanal nur einen Teil seiner Übermittlungskapazität bereitstellen kann, ist es erforderlich, einen zweiten B-Kanal durchzuschalten. Damit entstehen dem Benutzer bei jedem Verbindungsaufbau zusätzliche Kosten.

Die Aufgabe der Erfindung besteht darin, ein Verfahren zum Betrieb eines aus mehreren Teilanlagen bestehenden digitalen Kommunikationsnetzes anzugeben, wobei die einzelnen dazu gehörenden Teilanlagen über Anschlußleitungen des öffentlichen Kommunikationsnetzes verbunden werden können. Der Austausch von vermittlungstechnischen Informationen zwischen den einzelnen Teilanlagen soll dabei unabhängig von einem Signalisierungskanal digital in dem für eine Sprachverbindung bereitgestellten B-Kanal erfolgen. Dabei sollen keine zusätzlichen Datendienste und entsprechende Protokolle notwendig sein.

Zur Lösung dieser Aufgabe ist eine Merkmalskombination vorgesehen, wie sie im Patentanspruch 1 angegeben ist.

Damit wird in vorteilhafter Weise erreicht, daß bei den an einem digitalen Kommunikationsnetz beteiligten Teilanlagen ein einziger durchgeschalteter B-Kanal genügt, um den Austausch von vermittlungstechnischen Informationen zu ermöglichen. Da diese vermittlungstechnischen Zusatzinformationen digital über denselben Sprachkanal gesendet und empfangen werden, der für die Sprechverbindung bereitgestellt ist, entstehen dem Benutzer weder zusätzliche Kosten, noch ist eine spürbare Verzögerung im Verbindungsaufbau gegenüber einer herkömmlichen Sprechverbindung ohne Übertragung vermittlungstechnischer Zusatzinformation gegeben.

Weiterbildungen der Erfindung ergeben sich aus den Unteransprüchen. Hierbei ist besonders zu erwähnen, daß die Übertragung über eine standardisierte Leitungsschnittstelle stattfindet, so daß keine außergewöhnlichen Sende- und Empfangseinrichtungen erforderlich sind.

Ein Ausführungsbeispiel der Erfindung wird nachfolgend anhand von Zeichnungen näher erläutert.

Es zeigt
- Figur 1: ein Blockschaltbild eines Kommunikationsnetzes
- Figur 2: die Anordnung einer Virtuellnetz-Steuerung innerhalb einer Teilanlage
- Figur 3: ein Blockschaltbild der Virtuellnetz-Steuerung
- Figur 4: das Schema eines Meldungsformats

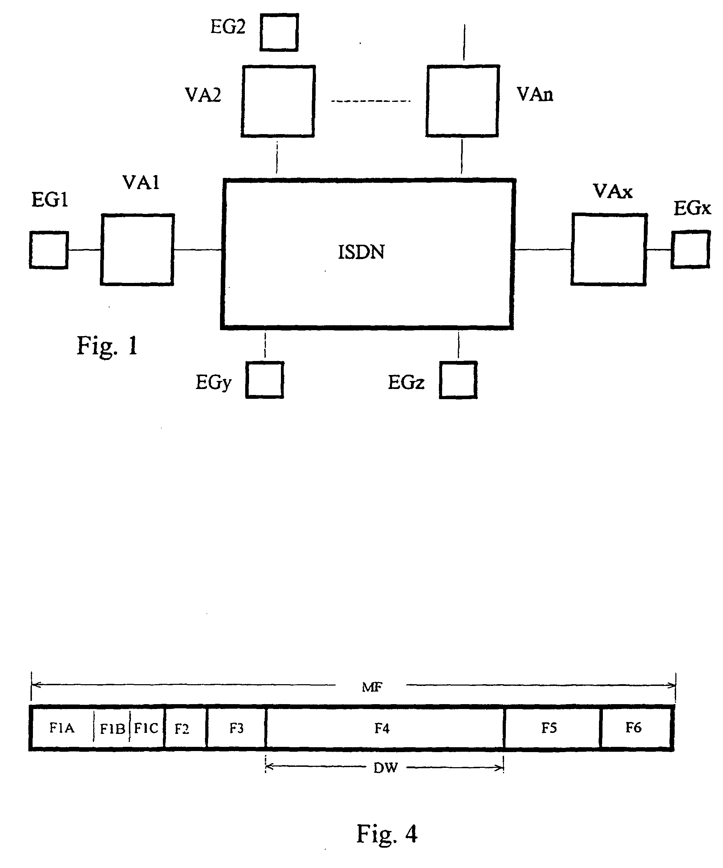

In der Figur 1 ist das Schema eines Kommunikationsnetzes dargestellt unter der Annahme, daß die Teilanlagen VA1 bis VAn zu einem Kommunikationsnetz zusammengefaßt sind. Dies bedeutet, daß die daran angeschlossenen Endgeräte, z. B. EG1 und EG2 so miteinander verbunden werden können, als wären sie an einer einzigen Vermittlungsanlage angeschlossen. Zur Verbindung der Teilanlagen VA1 bis VAn untereinander existieren keine direkten Leitungen, sondern die genannten Teilanlagen VA1 bis VAn sind einheitlich an das öffentliche Kommunikationsnetz ISDN angeschlossen. An dieses öffentliche Fernsprechnetz ISDN sind außerdem weitere Vermittlungsanlagen VAx mit Endgeräten EGx sowie weitere Endgeräte EGy und EGz angeschlossen, die nicht an dem Kommunikationsnetz beteiligt sind, welches aus den Teilanlagen VA1 bis VAn besteht.

Damit die besagten Teilanlagen VA1 bis VAn ein Kommunikationsnetz bilden können, müssen vermittlungstechnische Daten zwischen den einzelnen Teilanlagen, z. B. VA1 und VA2 ausgetauscht werden. Dabei handelt es sich beispielsweise um Kennungen für miteinander zu verbindende Endgeräte EG1 und EG2 sowie um deren Verkehrsberechtigung und die Art der angestrebten Verbindung. Unter der Annahme, daß von einem Endgerät EG1 aus, welches an die Teilanlage VA1 angeschlossen ist, eine Verbindung zum Endgerät EG2, welche an die andere Teilanlage VA2 angeschlossen ist, aufgebaut wird, kann in der Zielanlage entschieden werden, ob eine derartige Verbindung zulässig ist. In Abhängigkeit von der Verbindungsart, beispielsweise Internverbindung, Rückfrageverbindung, Fernverbindung, welche der jeweiligen Zielanlage, z. B. VA2 mitgeteilt wird, kann dort eine Verknüpfung stattfinden mit den jeweiligen Verkehrsberechtigungen der beteiligten Anschlußorgane. So ist es beispielsweise möglich, daß in einer weiteren Teilanlage VAn eine weiterführende Verbindung verhindert wird, wenn bei einer ankommenden Belegung die Verkehrsart und die Berechtigung des Anschlusses eines Endgerätes, z. B. EG1 mitgeteilt wird.

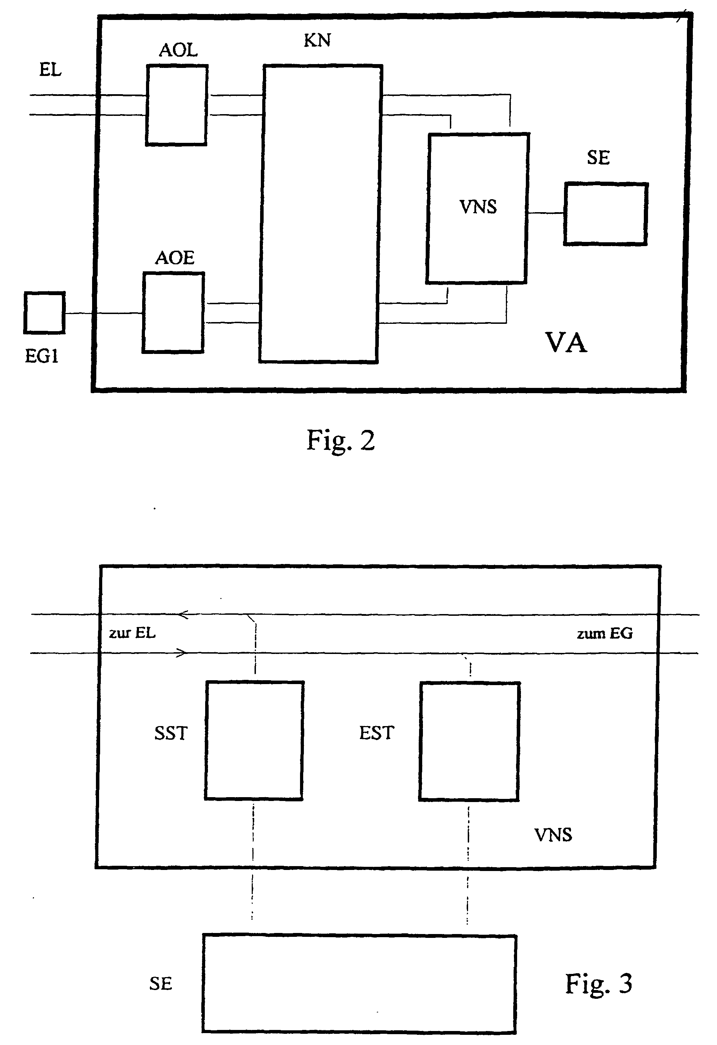

Anhand der Figur 2 wird nun beschrieben, auf welche Weise die zu einem Kommunikationsnetz zusammengefaßten Teilanlagen VA1 bis VAn vermittlungstechnische Informationen untereinander austauschen. Es sei angenommen, daß von einem Endgerät EG1 aus eine Verbindung aufgebaut werden soll zu einer anderen Teilanlage VA2 und dem dort angeschlossenen weiteren Endgerät EG2. Beim Aufbauen einer derartigen Verbindung ist eine Kennziffer zu wählen, wie dies aus den eingangs beschriebenen Netzwerk-Konfigurationen bekannt ist. Beim Erkennen einer derartigen Kennziffer innerhalb einer zentralen oder dezentralen Steuereinrichtung SE, welche für das Anschlußorgan AOE des betreffenden Endgerätes EG1 zuständig ist, wird diese Kennziffer umgesetzt in eine Rufnummer, die zum Erreichen der weiteren Teilanlage VA2 über das öffentliche Kommunikationsnetz ISDN zu wählen wäre. Außerdem wird bei der Auswertung der gewählten Kennziffer von der Steuereinrichtung SE erkannt, daß es sich um eine Verbindung handelt, die innerhalb eines aus mehreren Teilanlagen VA1 bis VAn bestehenden Kommunikationsnetzes verlaufen soll. Die Steuereinrichtung SE veranlaßt daraufhin, daß im Koppelnetz KN der Ursprungsteilanlage VA der zu einer Anschlußleitung EL des öffentlichen Kommunikationsnetzes ISDN führende Verbindungsweg über eine Virtuellnetz-Steuerung VNS geführt wird. Wenn der Verbindungsaufbau zwischen dem Anschlußorgan AOE des Endgerätes EG1 zum Anschlußorgan AOL der Anschlußleitung EL des öffentlichen Kommunikationsnetzes ISDN vollzogen ist und die Ziel-Teilanlage VA2 angesteuert wurde, so werden verbindungsbezogene und anschlußbezogene vermittlungstechnische Informationen über denselben Sprachkanal zur Ziel-Teilanlage VA2 übertragen, der für diese Verbindung in Anspruch genommen wird.

Hierzu zeigt die Figur 3 das Blockschaltbild der Virtuellnetz-Steuerung VNS, welche im wesentlichen aus einer Sendesteuerung SST und einer Empfangssteuerung EST besteht. Die von der Steuereinrichtung SE erfaßten Daten und Informationen über die Eigenschaften und Berechtigungen des anrufenden Anschlusses, bzw. Endgerätes EG1 sowie über die Verbindungsart werden der Sendesteuerung SST mitgeteilt. Daraufhin stellt die Sendesteuerung SST ein Meldungsformat MF zusammen, wie es in Figur 4 angedeutet ist.

Dieses Meldungsformat MF enthält im ersten Feld F1 mehrere Byte-Kombinationen, die sich deutlich von codierten Sprachbytes unterscheiden. Es werden also Bytefolgen gebildet, die in Sprechverbindungen sehr unwahrscheinlich sind. Daran wird in der Ziel-Teilanlage VA2 von einer Empfangseinrichtung, z. B. EST, erkannt, daß keine Sprache vorliegt, sondern daß es sich um ein Meldungsformat MF handelt, in dem vermittlungstechnische Informationen gesendet werden.

Zu diesem Zweck wird im ersten Teilfeld F1A des ersten Feldes F1 eine Folge von bei einer Sprachcodierung unwahrscheinlichen n Bytes versendet. Danach folgen im zweiten Teilfeld F1B des ersten Feldes F1 8 Bytes mit fallender Wertigkeit und positivem Vorzeichen. Im dritten Teilfeld F1C des ersten Feldes F1 werden dann 8 Bytes mit fallender Wertigkeit, aber mit negativem Vorzeichen gesendet. Diese im ersten Feld F1 gesendeten Byte-Kombinationen kennzeichnen also den Beginn eines Meldungsformats MF, wonach von einer Empfangseinrichtung ständig der PCM-Strom auf dem Sprachkanal durchsucht wird.

Die weiteren Felder F2 bis F6 des Meldungsformats MF enthalten Angaben über die Meldung selbst, d. h. ihre Art, ihre Nummer und ihre Länge und die eigentlichen vermittlungstechnischen Informationen. Dabei werden aus dem gesamten Vorrat von 256 möglichen PCM-Wörtern nur 16 ausgesuchte PCM-Wörter verwendet, von denen 8 mit positivem Vorzeichen und 8 mit negativem Vorzeichen sind. Diese PCM-Wörter haben jeweils einen Abstand von 16 Wertestufen zueinander. Damit können diese verschiedenen Bytes in der Empfangssteuerung EST der angerufenen Vermittlungsanlage VA2 auch dann noch deutlich voneinander unterschieden und richtig ausgewertet werden, wenn der Bitstrom im übertragungsweg digital gedämpft wird oder durch Umsetzer beeinflußt wurde. Diese 16 ausgewählten PCM-Wörter sind in der zuvor beschriebenen Wertigkeitsreihenfolge im Feld F1 (F1B und F1C) enthalten, so daß bei jeder Übertragung die vom übertragungsweg verursachten Veränderungen der Bitstruktur mitgeliefert werden und von der Empfangssteuerung EST berücksichtigt werden können.

Mit diesen 16 ausgewählten PCM-Wörtern werden nun Byte-Kombinationen zusammengestellt, die im zweiten Feld F2 des Meldungsformats die Nummer und die Art der Meldung angeben. Das dritte Feld F3 enthält eine Angabe über die Länge des Infomationsfeldes F4, welches mehrere Datenworte DW mit vermittlungstechnischen Informationen enthält. Im vorletzten Feld F5 ist eine Prüfsumme enthalten, womit festgestellt werden kann, ob die Datenworte DW des Informationsfeldes F4 richtig empfangen worden sind. Schließlich befindet sich im letzten Feld F6 des Meldungsformats MF eine Endemeldung, so daß am Empfangsort erkannt werden kann, daß das Meldungsformat MF vollständig empfangen worden ist. Die einzelnen Bytes des gesamten Meldungsformats MF werden im selben Sprachkanal (Nutzdatenkanal B) ebenso digital übertragen wie die Sprachsignale.

In der Ziel-Teilanlage VA2 sind ebenfalls Virtuellnetz-Steuerungen VNS vorgesehen, welche einer Anschlußleitung EL des öffentlichen Kommunikationsnetzes ISDN entweder fest zugeordnet sind oder im Bedarfsfall angeschaltet werden. Ein ankommendes Meldungsformat MF wird von der dortigen Empfangssteuerung EST erkannt, ausgewertet und an die zugehörige Steuereinrichtung SE weitergeleitet. Das Anschalten einer Virtuellnetz-Steuereinrichtung VNS an eine Anschlußleitung EL des öffentlichen Kommunikationsnetzes ISDN kann innerhalb der Ziel-Teilanlage VA2 in der gleichen Weise erfolgen, wie dies in Figur 2 dargestellt ist. Die Verbindung eines Anschlußorgans AOL einer Anschlußleitung EL des öffentlichen Kommunikationsnetzes ISDN mit einer Virtuellnetz-Steuereinrichtung VNS über das Koppelnetz KN kann in Abhängigkeit von dem innerhalb eines Signalisierungskanals empfangenen Kennzeichen, bzw. der Anschlußnummer einer anrufenden Teilanlage VA1 geschehen. Selbstverständlich besteht auch die Möglichkeit, einer Anschlußleitung EL des öffentlichen Kommunikationsnetzes ISDN eine Virtuellnetz-Steuerung VNS fest zuzuordnen. Die Virtuellnetz-Steuerung VNS kann aus einem digitalen Signalprozessor bestehen, welcher aufgrund seiner hohen Arbeitsgeschwindigkeit in der Lage ist, Meldungsformate MF für mehrere Anschlußleitungen EL des öffentlichen Kommunikationsnetzes ISDN zu senden und zu empfangen.

Durch die einheitliche Anordnung von Virtuellnetz-Steuerungen VNS in allen an einem Kommunikationsnetz beteiligten Teilanlagen VA1 bis VAn ist es möglich, Teilanlagen unabhängig von ihrem Standort zu einem Kommunikationsnetz zusammenzufassen. Außerdem können ohne weiteres weitere Teilanlagen hinzugefügt werden, ohne daß zusätzlicher Materialaufwand bei den bereits bestehenden Teilanlagen VA1 bis VAn erforderlich wird. Das Zusammenfassen mehrerer Teilanlagen VA1 bis VAn zu einem Kommunikationsnetz kann ohne Rücksicht auf deren Standort durchgeführt werden, wobei keine zusätzlichen Kosten entstehen beim Aufbau von Verbindungen.

## Patentansprüche

1. Verfahren zum Betrieb eines aus mehreren Teilanlagen bestehenden digitalen Kommunikationsnetzes, wobei Verbindungen zwischen den einzelnen Teilanlagen über Anschlußleitungen des öffentlichen Kommunikationsnetzes ISDN hergestellt werden und eine Übertragung von Kennzeichen über die dabei belegte Anschlußleitung stattfindet, womit die miteinander zu verbindenden Teilanlagen vermittlungstechnische Informationen austauschen, um derartige Verbindungen nach vorgegebenen Kriterien steuern zu können, und wobei Umwertungen von Kennziffern stattfinden,
**dadurch gekennzeichnet,**
**daß** nach dem Wählen einer für die Verbindung von einer ersten Teilanlage (VA1) zu einer anderen Teilanlage (VA2) des aus mehreren Teilanlagen (VA1 bis VAn) bestehenden Kommunikationsnetzes vorgesehenen Kennziffer innerhalb der die Verbindung aufbauenden Teilanlage (VA1) beim Verbinden des anrufenden Endgerätes (EG1) mit einer Anschlußleitung (EL) des öffentlichen Kommunikationsnetzes ISDN in diese Verbindung eine Virtuellnetz-Steuerung (VNS) eingeschleift wird, worin sich eine Sendesteuerung (SST) und eine Empfangssteuerung (EST) befinden, die mit einer dezentralen oder zentralen Steuereinrichtung (SE) dieser Teilanlage (VA1) zusammenarbeiten,
**daß** nach dem durch Umwerten der Kennziffer in eine Anschlußnummer erfolgenden Aufbau einer Verbindung über das öffentliche Kommunikationsnetz ISDN zu einer anderen Teilanlage (VA2) von der Sendesteuerung (SST) Datenworte (DW) gebildet werden, die vermittlungstechnische Zusatzinformationen enthalten, wie PCM-Worte strukturiert sind und sich in einem Informationsfeld (F4) eines aus mehreren Feldern (F1 bis F6) bestehenden Meldungsformates (MF) befinden,
**daß** das gesamte Meldungsformat (MF) über den bereits für eine Sprachverbindung durchgeschalteten B-Kanal zur angerufenen Teilanlage (VA2) gesendet wird, wobei zu Beginn im ersten Feld (F1A, F1B, F1C) Bytefolgen übertragen werden, welche nur solche aus den insgesamt beim PCM-Verfahren gegebenen 256 Möglichkeiten ausgewählte Bytes enthalten, die bei den Informationen in den übrigen Feldern (F2 bis F6) angewendet werden,
und **daß** die Empfangssteuerung (EST) der angerufenen Vermittlungsanlage (VA2) an den im ersten Feld (F1A, F1B, F1C) enthaltenen Bytefolgen erkennt, daß es sich nicht um digitalisierte Sprache, sondern um ein Meldungsformat (MF) handelt, welches vermittlungstechnische Zusatzinformationen enthält, wobei die in den Datenworten (DN) eines Feldes (F4) enthaltenen Zusatzinformationen über die Verbindungsart sowie die Eigenschaften und Berechtigungen des anrufenden Anschlusses bzw. Endgerätes (EG1) in der angerufenen Teilanlage (VA2) ausgewertet werden.

2. Verfahren nach Anspruch 1,
**dadurch gekennzeichnet,**
**daß** im ersten Teil (F1A) des ersten Feldes des Meldungsformates (MF) eine Abfolge von n Bytes gesendet wird, die bei der Sprachcodierung sehr unwahrscheinlich ist,
**daß** die daran sich anschließenden Teilfelder (F1B, F1C) jeweils gleichzahlige Bytefolgen mit fallender Wertigkeit aufweisen, wovon die erste Gruppe im Teilfeld (F1B) ein anderes Vorzeichen hat als die zweite Gruppe im Teilfeld (F1C),
und **daß** an den in allen drei Teilfeldern (F1A, F1B, F1C) gesendeten Byte-Kombinationen das Vorliegen eines Meldungsformates (MF) mit vermittlungstechnischer Zusatzinformation in der angerufenen Teilanlage (VA2) erkannt wird.

3. Verfahren nach Anspruch 1,
**dadurch gekennzeichnet,**
**daß** die im ersten Feld (F1A, F1B, F1C) als Bytefolgen gesendeten PCM-Wörter den größtmöglichen Wertestufen-Abstand voneinander haben,
und **daß** Änderungen dieser PCM-Wörter infolge von Dämpfungen oder Codewandlungen im Übertragungsweg von der Empfangssteuerung (EST) der angerufenen Vermittlungsanlage (VA2) erkannt und beim Empfang der übrigen Felder (F2 bis F6) des Meldungsformates (MF) berücksichtigt werden.

4. Verfahren nach Anspruch 2,
**dadurch gekennzeichnet,**
**daß** im dann folgenden Feld (F2) des Meldungsformates (MF) Angaben über die Nummer und die Art der Meldung enthalten sind,
und **daß** im nächsten Feld (F3) die Länge des Informationsfeldes (F4) angegeben ist.

5. Verfahren nach Anspruch 2,
**dadurch gekennzeichnet,**
**daß** im vorletzten Feld (F5) eine Prüfsumme enthalten ist, und daß das letzte Feld (F6) eine Endemeldung darstellt.

6. Verfahren nach Anspruch 1,
**dadurch gekennzeichnet,**
**daß** bei einer ankommenden Verbindung in einer Teilanlage (VA2) eines virtuellen Kommunikationsnetzes eine Virtuellnetz-Steuerung (VNS) einer Anschlußleitung (EL) des öffentlichen Kommunikationsnetzes ISDN zugeschaltet wird, wenn auf dem Signalisierungskanal (D) eine Information empfangen wird, die eine zum Kommunikationsnetz gehörende Teilnanlage (VA1) kennzeichnet.

7. Verfahren nach Anspruch 1,
**dadurch gekennzeichnet,**
**daß** eine Virtuellnetz-Steuerung (VNS) einer Anschlußleitung (EL) des öffentlichen Kommunikationsnetzes ISDN permanent zugeordnet ist.

8. Verfahren nach Anspruch 1,
**dadurch gekennzeichnet,**
**daß** eine Virtuellnetz-Steuerung (VNS) aus einem digitalen Signalprozessor besteht und mehreren Anschlußleitungen (EL) des öffenlichen Kommunikationsnetzes ISDN zur Verfügung steht.

9. Verfahren nach Anspruch 1,
**dadurch gekennzeichnet,**
**daß** eine Virtuellnetz-Steuerung (VNS) einem aus mehreren Kommunikations-Kanälen bestehenden Hochgeschwindigkeits-Anschluß (z. B. 2 MB/s) zur Verfügung steht.

## Claims

1. A method for operating a digital communications network with several subsystems, wherein connections between the individual subsystems are generated via access lines of the public communications network ISDN, and a transmission of code marks occurs via the access line occupied thereby, whereby the subsystems to be interconnected exchange switching-oriented information to enable controlling such connections according to predetermined criteria, and wherein code numbers are converted, **characterised in that**
after the dialling of a code number for the connection from a first subsystem (VA1) to an other subsystem (VA2) of the communications network comprising several subsystems (VA1 to VAn) within the subsystem (VA1) setting up the connection when connecting the called terminal (EG1) with an access line (EL) of the public communications network ISDN a virtual network control (VNS) is looped in this connection, the virtual network control (VNS) comprising a transmission control (SST) and a receive control (EST) both cooperating with a non-central or central control unit (SE) of this subsystem (VA1),
after the set up of a connection via the public communications network ISDN to an other subsystem (VA2) resulting from the conversion of the code number data words (DW) are generated, the data words comprising additional switching-oriented information, being structured like PCM words, and being located in an information field (F4) of a signalling message format (MF) having several fields (F1 to F6),
the whole signalling message format (MF) is transmitted via the B-channel already switched through for a voice connection to the called subsystem (VA2), wherein at the beginning byte sequences are transmitted in the first field (F1A, F1B, F1C), the byte sequences comprising only such bytes selected from the total of 256 possibilities given by the PCM method that are applied as information in the other fields (F2 to F6),
and **in that** the receive control (EST) of the called switch (VA2) recognises from the byte sequences of the first field (F1A, F1B, F1C) that it is not about digitised speech but is about a signalling message format (MF) comprising additional switching-oriented information, wherein the additional information comprised in the data words (DN) of a field (F4) is evaluated about the kind of connection as well as the features and authorisations of the called terminal (EG1) in the called subsystem (VA2).

2. The method according to claim 1, **characterised in that** in the first section of the first field (F1A) of the signalling message format (MF) a sequence of n bytes is sent that is very unlikely for voice coding,
the field sections following thereafter (F1B, F1C) each comprise byte sequences of equal number with decreasing valency, the first group in the field section (F1B) having a different sign than the second group in the field section (F1C),
and **in that** the existence of a signalling message format (MF) with additional switching-oriented information is recognised by the byte combinations transmitted in all three field sections (F1A, F1B, F1C) in the called subsystem (VA2).

3. The method according to claim 1, **characterised in that** the PCM words sent in the first field (F1A, F1B, F1C) as byte sequences have the greatest code distance from each other,
and **in that** changes of these PCM words due to damping or code transformations in the transmission line are recognised by the receive control (EST) of the called switch (VA2) and are considered on the reception of the other fields (F2 to F6) of the signalling message format (MF).

4. The method according to claim 2, **characterised in that** the subsequent field (F2) of the signalling message format (MF) comprises specifications about the number and the kind of the signalling message, and the subsequent field (F3) comprises the length of the information field (F4).

5. The method according to claim 2, **characterised in that** the pre-last field (F5) comprises a checksum, and the last field (F6) comprises an end message.

6. The method according to claim 1, **characterised in that** upon an arriving connection in a subsystem (VA2) of a virtual communications network a virtual network control (VNS) is switched to an access line (EL) of the public communications network ISDN, if on the signalling channel (D) an information identifying a subsystem (VA1) of the communications network is received.

7. The method according to claim 1, **characterised in that** a virtual network control (VNS) is permanently assigned to an access line (EL) of the public communications network ISDN.

8. The method according to claim 1, **characterised in that** a virtual network control (VNS) consists of a digital signal processor and serves several access lines (EL) of the public communications network ISDN.

9. The method according to claim 1, **characterised in that** a virtual network control (VNS) serves a high speed access line (e.g. 2 MB/s) consisting of several communication channels.

## Revendications

1. Procédé de fonctionnement d'un réseau de communication numérique avec plusieurs commutateurs individuels, selon lequel les connexions entre les commutateurs individuels sont construites sur des lignes d'accès du réseau de communication public RNIS et une transmission de données est réalisée par la ligne d'accès ainsi couverte, par lesquelles les commutateurs devant être connectés les uns avec les autres échangent des informations techniques de commutation, pour pouvoir commander ce type de connexions selon des critères prédéterminés, et dans laquelle des traductions d'indicatifs chiffrés se produisent,
**caractérisé en ce qu'**
après avoir choisi un indicatif chiffré prévu pour la connexion d'un premier commutateur individuel (VA1) à un autre commutateur individuel (VA2) du réseau de communication doté de plusieurs commutateurs (VA1 à VAn) au sein du commutateur individuel (VA1) préparant la connexion, une commande de réseau virtuel (VNS) est dressée en connectant l'équipement terminal (EG1) appelant à une ligne d'accès (EL) du réseau de communication public RNIS dans cette connexion, dans laquelle se trouve une commande d'émission (SST) et une commande de réception (EST) qui coopèrent avec un équipement de régulation (SE) centralisé ou décentralisé de ce commutateur (VA1),
après l'établissement, effectué par l'interprétation de l'indicatif chiffré en un numéro de connexion, d'une connexion via le réseau de communication public RNIS vers un autre commutateur individuel (VA2), des mots de données (DW) sont formés par la commande d'émission (SST), lesquels contiennent des informations techniques supplémentaires de commutation, sont structurés comme des mots PCM et se trouvent dans un champ d'information (F4) d'un format de message (MF) comprenant plusieurs champs (F1 à F6),
le format de message (MF) complet est envoyé par le canal B déjà couplé pour une communication locale vers le commutateur individuel (VA2) appelé, dans lequel des suites de bits sont transmises tout d'abord dans le premier champ (F1A, F1B, F1C), lesquelles contiennent uniquement les bits choisis parmi les 256 possibilités données par le modèle MIC, qui sont utilisés par les informations des autres champs (F2 à F6),
et la commande de réception (EST) du commutateur appelé (VA2) détecte que, dans les suites de bits contenues dans le premier champ (F1A, F1B, F1C), il ne s'agit pas de voie numérique mais au contraire d'un format de message (MF) qui contient des informations techniques supplémentaires de commutation, dans lequel les informations supplémentaires contenues dans les mots de données (DN) d'un champ (F4) sont interprétées dans le commutateur appelé (VA2) par le mode de connexion et les propriétés et autorisations de la connexion appelante, respectivement de l'équipement terminal (EG1).

2. Procédé selon la revendication 1,
**caractérisé en ce que**
dans la première partie (F1A) du premier champ du format de message (MF), une suite de n bits est envoyée, laquelle est très improbable dans une codification vocale,
les champs partiels (F1B, F1C) s'y connectant présentent respectivement des suites de bits de même nombre avec une valence décroissante, par lesquelles le premier groupe du champ partiel (F1B) a un autre signe que le second groupe du champ partiel (F1C),
et on reconnaît, par les combinaisons de bits envoyées dans les trois champs partiels (F1A, F1B, F1C), dans le commutateur individuel appelé (VA2) la présence d'un format de message (MF) avec des informations techniques supplémentaires de commutation.

3. Procédé selon la revendication 1,
**caractérisée en ce que**
les mots MIC, envoyés dans le premier champ (F1A, F1B, F1C) par des suites de bits, ont un pas-niveau de valeur entre eux le plus élevé possible,
et des modifications de ces mots PCM suite à des affaiblissements ou des transformations du codage de la voie de transmission sont détectées par la commande de réception (EST) du commutateur appelé (VA2) et sont prises en considération par la réception des autres champs (F2 à F6) du format de message (MF).

4. Procédé selon la revendication 2,
**caractérisé en ce que**
dans le champ suivant (F2) du format de message (MF), des données sont contenues sur le nombre et le type de message,
et dans le champ suivant (F3), la longueur du champ d'information (F4) est donnée.

5. Procédé selon la revendication 2,
**caractérisé en ce que**
l'avant-dernier champ (F5) contient une somme de contrôle, et dans laquelle le dernier champ (F6) représente un message final.

6. Procédé selon la revendication 1,
**caractérisé en ce qu'**
une commande de réseau virtuel (VNS) d'une ligne d'accès (EL) du réseau de communication public RNIS est couplée par une connexion entrante dans un commutateur (VA2) d'un réseau de communication virtuel, lorsqu'une information est reçue par le canal de signalisation (D), laquelle information caractérise un commutateur individuel (VA1) appartenant au réseau de communication.

7. Procédé selon la revendication 1,
**caractérisée en ce qu'**
une commande de réseau virtuel (VNS) d'une ligne d'accès (EL) du réseau de communication public RNIS est permanente.

8. Procédé selon la revendication 1,
**caractérisée en ce qu'**
une commande de réseau virtuel (VNS) comprend un processeur de signaux numériques et dispose de plusieurs lignes d'accès (EL) du réseau de communication public RNIS.

9. Procédé selon la revendication 1,
**caractérisée en ce qu'**
une commande de réseau virtuel (VNS) dispose d'une ligne à haut débit (par exemple 2 MB/s) comprenant plusieurs canaux de communication.
